(19) Europäisches Patentamt / European Patent Office / Office européen des brevets

(11) **EP 4 742 589 A1**

(12) **EUROPEAN PATENT APPLICATION**

(43) Date of publication:
**13.05.2026 Bulletin 2026/20**

(21) Application number: **24211491.6**

(22) Date of filing: **07.11.2024**

(51) International Patent Classification (IPC):
**H04L 9/32** (2006.01)     **H04L 9/00** (2022.01)
**G06F 21/60** (2013.01)

(52) Cooperative Patent Classification (CPC):
**G06F 21/602; H04L 9/3239; H04L 9/3247; H04L 9/50**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(71) Applicant: **NXP B.V.**
**5656 AG Eindhoven (NL)**

(72) Inventors:
• **van VREDENDAAL, Christine**
**5508 TS Veldhoven (NL)**

• **CUSTERS, Frank**
**5617AL Eindhoven (NL)**
• **VERBAKEL, Denise Elisabeth Petronella**
**5731 ND Mierlo (NL)**
• **van NIEKERK, Eva**
**22459 Hamburg (DE)**

(74) Representative: **Hardingham, Christopher Mark**
**NXP Semiconductors**
**Intellectual Property Group**
**The Cattle Barn**
**Upper Ashfield Farm, Hoe Lane**
**Romsey, Hampshire SO51 9NJ (GB)**

(54) **USING DUMMY SIGNATURES FOR FASTER HBS ON THE FLY SIGNING TIMES**

(57)     A method is proposed to make more efficient use of limited computing resources in signature generation.

Fig. 1

## Description

## FIELD

The invention relates to a method and system. Particularly, but not exclusively, the invention relates to the generation of authentication path data.

## BACKGROUND

Digital signatures are of vital importance to our cryptographic infrastructure. For example, they underpin the authentication infrastructure in the form of digital certificates on the internet, which is shifting more and more to resource-constrained devices as part of the Internet of Things (IoT). In order to make digital signatures accessible to such small devices, it is important to minimize the resource requirements and optimize the efficiency of the involved algorithms (e.g., key generation, signing and verification).

These signatures can be computationally intensive to generate, and this can be problematic for signature generation by devices which have limited memory resources.

Aspects and embodiments were conceived with the foregoing in mind.

## SUMMARY

Aspects relate to the generation of cryptographic signatures and authentication path data to be used alongside cryptographic signatures or as part of cryptographic signatures.

Viewed from a first aspect, there is provided a computer implemented method of generating authentication path data for a cryptographic signature generation process. An authentication path may comprise data to be used in support of authenticating the generated cryptographic signature. The data may comprise a series of hashes corresponding to nodes on the authentication path. The method may be implemented by processing resource. The processing resource may be hardware or software implemented. The processing resource may be hosted by an embedded computing device. The processing resource may be hosted within a computing device. The processing resource may be a cryptographic processing resource which is configured to perform cryptographic operations. The processing resource may receive input requests from an external computing entity or another computing entity which shares the same chip. The method may comprise traversing a hash tree. The traversal may comprise the application of a computer program which comprises instructions which can be used to access each node on the hash tree to determine the hash value. The hash tree may be associated with a signature generation process on a computing device. The signature generation process may implement hash-based signature generation in accordance with, for example, Leighton-Micali Signatures (LMS) or Extended Merkle Signature Scheme (XMSS). The method may, based on the traversal of the hash tree, identify future cryptographic signatures to be generated in association with or using the hash tree. The method may comprise applying a signature generation threshold to the identified future cryptographic signatures to identify future cryptographic signatures which exceed the signature generation threshold and cryptographic signatures which do not exceed the signature generation threshold. The signature generation threshold may be based on the computation associated with the identified cryptographic signature.

If the signature generation threshold is exceeded by at least one future cryptographic signature, the method further comprises generating a dummy signature to be used as part of authentication path data associated with the at least one future cryptographic signature. The method may further comprise updating the state of the underlying hash tree to indicate the future signature has been used or has a dummy signature associated with it.

A dummy signature is a cryptographic signature which may be generated in response to identifying computationally intensive signatures. The dummy signature is a cryptographic signature which, for example, is generated in accordance with the LMS or XMSS approaches described in NIST Special Publication 800-208, which assigns a cryptographic signature to a randomly generated sequence of characters. The randomly generated sequence of characters does not correspond to a message or data item to be signed responsive to input from a user or a computing entity. That is to say, the dummy signature is generated responsive to the identification of computationally intensive signatures in that the dummy signature is a cryptographic signature which is used to sign a random sequence of characters The randomly generated sequence of characters may be randomly or pseudo-randomly generated by the processing resource or it may be retrieved from an external entity. A dummy signature may also be generated in association with a message which is made up solely of zeros in that a cryptographic signature may be generated to sign a sequence of zeros of a message length specified by a user, the processing resource or a manufacturer of the processing resource or an entity external to the processing resource. The use of the all zero message in this response further improves signing times. Also, in accordance with NIST Special Publication 800-208, an authentication path is generated to accompany the dummy signature.

A method in accordance with the first aspect enables computationally intensive signatures to be identified and replaced with a dummy sjgnature. This means the state of the hash tree can be updated to say the computationally intensive signature has been used and other signatures, which are not so computationally intensive, can then be used and the state updated accordingly. This also means the signatures which are not so computationally intensive as the preceding computationally intensive signatures, which will likely contribute to the authentication path of the computationally less intensive signature, are replaced with a dummy signature and its associated authentication path. This reduces the time needed to provide the computationally less intensive signatures and their associated authentication path data.

Optionally, the method may further comprise receiving a request for a cryptographic signature wherein the request may be from an external computing resource or from a computational process implemented on the processing resource. An external computing resource may be a computing entity which is distinct from the computing entity which hosts the processing resource. A computational process implemented on the processing resource may be a process which is executed on the same computing device as the one which hosts the processing resource.

Optionally, the signature generation threshold may be based on a maximum signature generation time and signature node computation cost. Optionally, the signature generation threshold is defined as:

$$T_F = \frac{t}{C}$$

wherein t is the maximum signature generation time and C is the signature node computation cost.

Optionally, the maximum signature generation time may be specified by an entity which implements or requests the signature generation.

Optionally, the signature node computation cost may be based on an average hash computation time.

Optionally, the method may comprise, prior to applying the signature generation threshold, optimising the signature generation threshold by iteratively modifying the signature generation threshold. This may be by adjusting the signature generation threshold such that a specific threshold is reached. The specific threshold may be set by a user or a technical requirement.

Optionally, modifying the signature generation threshold may comprise increasing the signature generation threshold if a threshold number of future signatures do not exceed the signature generation threshold.

Optionally, the dummy signature may be based on a randomly generated character sequence.

Optionally, the randomly generated character sequence may be an alphanumeric sequence.

Optionally, the processing resource may be hosted within an embedded computing device.

Optionally, the method may further comprise providing an authentication path as part of a cryptographic signature, wherein the authentication path comprises the dummy signature.

Optionally, the identification of future signatures may be based on the identification of right hand nodes in the hash tree.

Optionally, upon identifying a signature which exceeds the signature generation threshold, signatures proceeding the signature may be discarded to enable further signatures to be generated more quickly. In an example, where the next 6 signatures are identified as being, say, fast-fast -slow-fast-fast-fast (where slow/fast denotes exceeding the signature generation threshold and not exceeding the signature generation threshold threshold respectively) then 3 dummy signatures can be performed (discarding the exceeding signature and the 2 before) to guarantee 4 fast signatures afterwards.

Optionally, the signature generation is based on LMS or XMSS signature generation.

A non-transitory computer readable storage medium may be provided having stored thereon executable instructions that, as a result of being executed by a processor of a computer system, cause the computer system to at least perform the method of the first aspect.

A system may be provided which is configured to implement the method of the first aspect.

A processing resource may be provided comprising a processor and memory including executable instructions that, as a result of execution by the processor, causes the reader to perform the method of the first aspect.

## DESCRIPTION

An embodiment will now be described by way of example only and with reference to the following drawings in which:

Figure 1 illustrates a process of generating authentication path data in accordance with the embodiment;

Figure 2 illustrates a processing resource configured to generate authentication path data in accordance with the embodiment;

Figure 3 illustrates a hash tree to be used to generate cryptographic signatures and authentication path data in accordance with the embodiment; and

Figure 4 illustrates an authentication path in accordance with the embodiment.

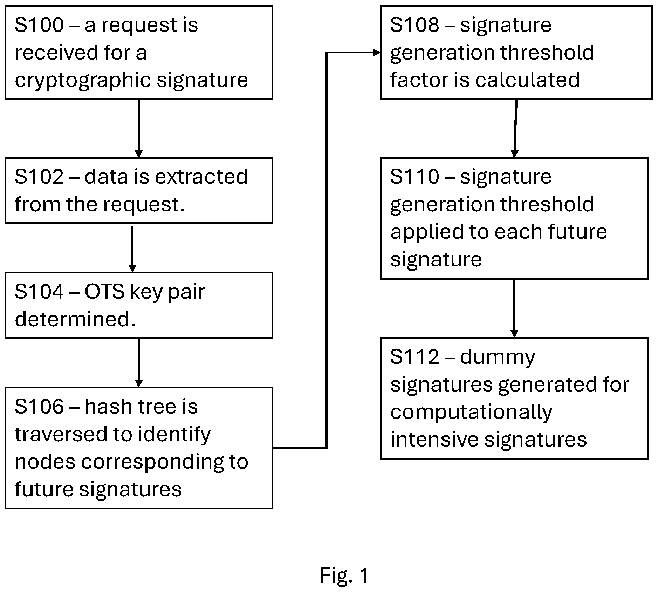

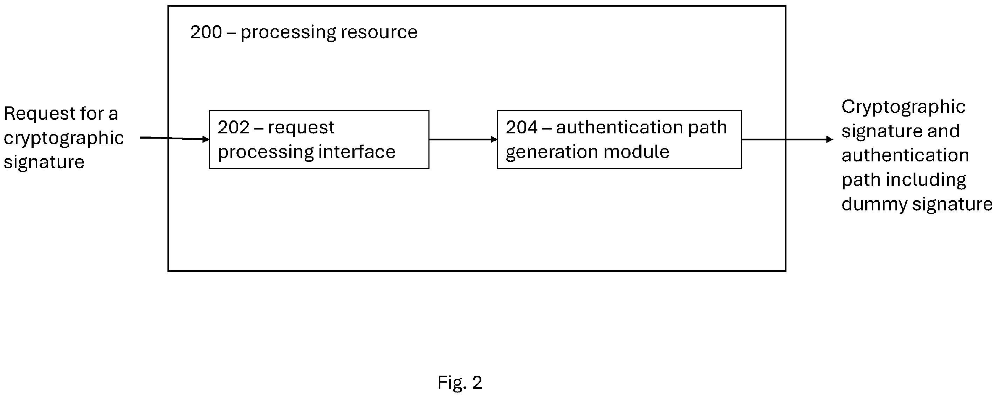

We now describe, with reference to Figures 1 to 3, how a processing resource 200 can be used to generate authentication path data to be used in support of a cryptographic signature generation process.

Processing resource 200 may be hosted within an embedded computing device or another computing device which has limited access to memory, and which is therefore inhibited when it comes to computationally demanding tasks such as cryptographic signature generation and the associated authentication path calculations.

In a step S100, the processing resource 200 may receive a request for a cryptographic signature to be generated in accordance with a cryptographic signature generation scheme. Examples may include Leighton-Micali Signatures (LMS) or Extended Merkle Signature Scheme (XMSS). In order that the signature may be authenticated, an authentication path is also provided with the cryptographic signature after it has been calculated. The authentication path supports the accuracy and authenticity of the cryptographic signature.

The request for the cryptographic signature may be received from an entity such as a computing entity which is external to the processing resource 200, i.e. it transmits a message to the processing resource with a request for a cryptographic signature to be provided in accordance with an LMS or XMSS signature generation scheme. The request may be received from a user of a computing resource which hosts the processing resource 200. The processing resource 200 may be regarded as a cryptographic processing unit and the computing entity may be a separate subsystem which share the same chip. The cryptographic processing unit may receive requests for cryptographic operations such as, for example the provision of cryptographic signatures or authentication path data.

The processing resource may be part of an embedded computing device which has limited access to random access memory. This can make signature generation and the generation of authentication path data difficult due to the computational resources required for the computation of the associated data.

Nonetheless, where hash based signature schemes such as, for example, LMS or XMSS are concerned, the generation of the authentication path data is important for supporting the authenticity of the generated cryptographic signature. That is to say, implicit in any request for a cryptographic signature in accordance with a hash based signature scheme is a request for the associated authentication path data and so it must be generated to be transmitted alongside the cryptographic signature.

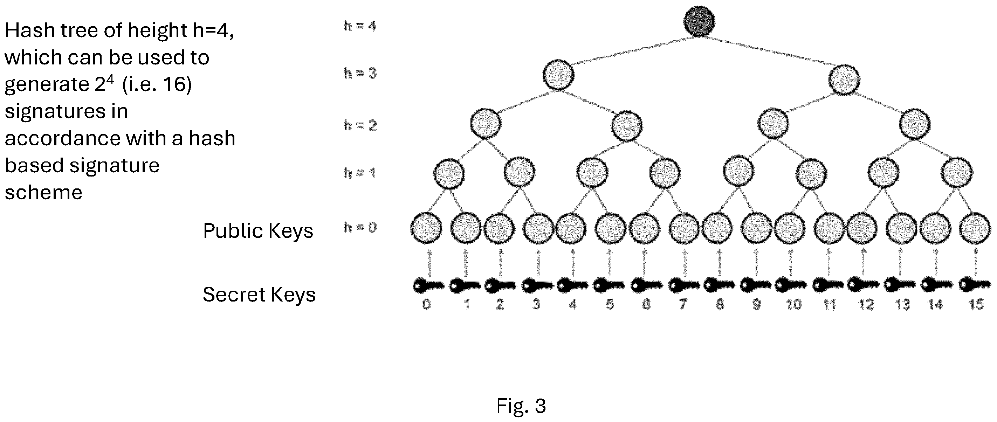

In a step S102, the data which is subject of the cryptographic signature is extracted from the request by a request processing interface 202 so that the signature scheme can be applied to the data. In applying the signature scheme, a secret key is selected from a hash tree as illustrated in Figure 3. It is used to generate a cryptographic signature in accordance with a hash based signature generation scheme such as, for example, LMS and XMSS.

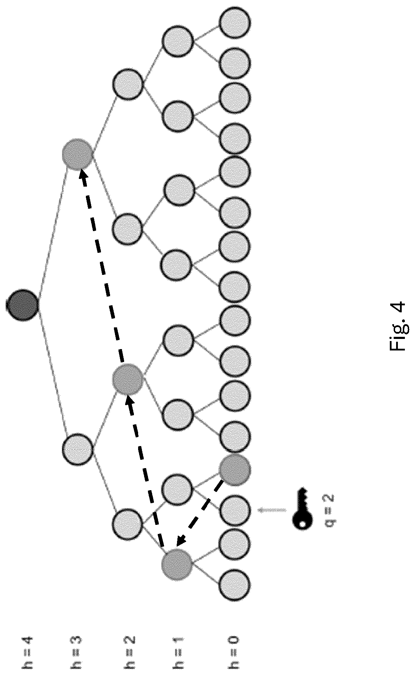

In a step S104, an authentication path generation module 204 may determine which of the One - Time Signature (OTS) key pairs are being used for the signature generation. As illustrated in Figure 4, that may be the second key pair in the 16 which can be used by the hash tree (marked as q=2 in Figure 4). For the sake of clarity, this is described as the current signature as it is the one which has been contemporaneously requested in step S200.

When signing a message or an item of data (whichever is provided in step S100 and extracted in step S102), the processing resource 200 signs with a (previously unused) OTS keypair, and sends the OTS signature of their message, along with the corresponding authentication path to an entity which can verify the signature.

This authentication path has as a purpose that a verifier can verify an OTS signature against the public key of the Merkle-tree-based scheme instead of against the OTS public key.

Given the signature, the verifying entity can then compute the candidate root key as follows. First they compute the OTS PK from the OTS signature, and apply a hash to construct the corresponding Merkle tree leaf. Then they can apply, in order, a pairwise hash with the elements of the provided authentication path. If the result matches the public key, the signature is verified.

For the signer, computing the authentication path is a computation-intensive task. If they start from just their OTS secret keys (often stored in the form of a SEED), they have to re-compute most Merkle tree leaf nodes (the most computationally expensive part) to be able to compute the authentication path. Alternatively they could store the entire Merkle tree in memory. However, for the parameter sets of interest (h=10, 15, 16 or even 20) this means storing more than 50 kB, or even MBs, which is infeasible on constrained devices such as embedded computing devices.

A typical authentication path corresponding to the third signature is illustrated in Figure 4 with dotted lines. That is to say, the hash values corresponding to nodes on this path need to be provided to a verifier in order for the signature to be authenticated.

In a step S106, the authentication path generation module 204 traverses the hash tree to identify nodes corresponding to future signatures. That is to say, signatures onwards from the present signature, i.e. those which in this example would correspond to signatures q=3 to 15. In other words, future signatures are signatures which are yet to be utilized by the hash tree. Alternatively or optionally, steps S100 to S104 may be omitted in that the method may start with the traversal of the hash tree to identify nodes corresponding to future signatures. This may be performed automatically (i.e. without user input) when the underlying processing resource has spare computational capacity, say, or at a time frequency specified by the configuration of the processing resource 200. That is to say, the described method can be performed as a background process by the authentication path generation module 204. The present signature in use is reflected by the state of the hash tree, in accordance with NIST Special Publication 800-208 "Recommendation for Stateful Hash Based Signature Schemes"

For each future signature, in a step S108, a signature generation threshold factor ($T_F$) is calculated using the equation:

$$T_F = \frac{t}{C}$$

wherein t is the maximum signature generation time and C is the signature node computation cost.

C is the cost of a leaf node computation and it is generally based on the measured time produced by the number of hash calls (approximately $wl$ for the LMS/XMSS parameters w and I) multiplied by the time necessary to compute, on average, one hash on an n-byte message (where n is another LMS/XMSS parameter). The parameter w relates to the length of the Winternitz chain where XMSS is being deployed and the number of bits from the hash or checksum used in the Winternitz chain where LMS is used. The parameter I relates to the number of n-byte string elements in an OTS private key, public key and signature. The parameter n relates to the number of bytes in a hash function deployed by either of an LMS or XMSS signature scheme.

The time necessary to compute one hash on an n-byte message can be retrieved from storage which is local to the authentication path generation module 204. The maximum signature generation time (t) corresponds to the maximum desired on-the-fly signing time t and it is required that t > C since a signature can always take that long. An on-the-fly signing time may relate to the time taken to compute the signature in real-time without any interruption to the other steps of the process. The factor C will typically be approximately 1000 hashes. The maximum on the fly signing time may be as low as 15 milliseconds. The factor $T_F$ may be around 40 milliseconds.

Generally speaking, where hash trees are concerned, nodes can be calculated as left-hand and right-hand nodes. Left-hand nodes are often considered easy to compute from past-signature authentication path nodes, and therefore the specific nodes to compute them from these past-signature authentication path nodes can be stored (for example as a BDS state) after computation. The right-hand nodes are generally considered more expensive to compute since they have to be computed from scratch. Additionally, the higher the node in the tree, the more expensive it is to compute. The BDS state therefore may be used to store the right-hand nodes of the top k layers. The BDS state may also be used to store a stack of intermediary values for right node computations, as to distribute the high computation load equally over the upcoming signatures. However, we do not generally have available this level of memory. This means that some signature that are fast and some that are slow (i.e. they exceed the signature generation threshold) and we try to mitigate the delay caused by those slow signatures by utilising dummy signatures as described below.

The factor $T_F$ can be optimised and adjusted if it is initially calculated to be too low, i.e. if an insufficient number of signatures do not exceed $T_f$ then the maximum signature generation time and the signature node computation cost can either individually or both be adjusted until a suitable balance point is reached and the factor $T_F$.

The signature generation threshold can then, in a step S110, be applied to each future signature by calculating, for each future signature, the factor $T_F$ and if it exceeds $T_F$ as calculated above, i.e. the optimised version, the respective future signature can be allocated to a first set of future signatures. If it is less than or equal to the optimised factor $T_F$, the respective future signature can be allocated to a second set of future signatures.

The first set of future signatures may be described as the computationally intensive set of signatures. The second set of future signatures may be described as the computationally light set of signatures.

At this stage it aids clarity to consider the example more specifically and we consider the situation where the next 5 signatures, i.e. signatures corresponding to the key pairs 3, 4, 5, 6 and 7 are assigned to both the first set of future signatures and the second set of future signatures in that the 3rd signature and the 7th signature are assigned to the first set of signatures and the 4th, 5th and 6th signatures are assigned to the second set of signatures. That is to say, the 3rd signature and the 7th signature are determined to be computationally intensive and the 4th, 5th and 6th signatures are determined to be computationally light.

In a step S112, a dummy signature corresponding to the 3rd signature and the 7th signature can be determined. A dummy signature, put simply, is a cryptographic signature which is generated by the authentication path generation module 204 and can be generated without request from an external entity or user input, i.e. is automatically generated by the authentication path generation module 204 responsive to identifying computationally intensive signatures.

The dummy signature is a cryptographic signature which, for example, is generated in accordance with the LMS or XMSS approaches described in NIST Special Publication 800-208, which assigns a cryptographic signature to a randomly generated sequence of characters. The randomly generated sequence of characters may be randomly or pseudo-randomly generated by the authentication path generation module 204 or it may be retrieved from an external entity.

Also, in accordance with NIST Special Publication 800-208, an authentication path is generated to accompany the dummy signature. Dummy signatures can then be used in place of the 3rd signature and 7th signature and the state of the hash tree can be updated (this may occur when the signature corresponding to q=2 is generated and transmitted) to reflect that the next signature is the 4th signature.

Alternatively or optionally, if the signature corresponding to q=2 has not yet been generated, the signature corresponding to q=2 may be discarded and the signature generation options may proceed directly to the 4th signature, updating the state of the hash tree accordingly and using the 3rd signature, i.e. the dummy signature generated in place of the third signature, as authentication path data for the 4th signature.

Accompanying pointers corresponding to the 7th signature, which indicate whether it has been used or not, can also be updated to say that it can be replaced by a dummy signature. This means that when the 6th signature is used, the state of the hash tree can then be updated to say that the 6th signature has been used, an accompanying database can then be used to determine that the 7th signature can be replaced with a dummy signature, and the next signature generation can proceed on the basis of the 8th signature. Steps S106 to S112 can continue in the background and repeatedly determine whether future signatures are computationally intensive or not and then determine that dummy signatures can be used to replace them in order to increase the speed at which less computationally intensive signatures can be provided.

Consistent with numerous protocols around hash-based signature generation, the state of the hash tree must indicate the signature to be used next and it may be that it that the signatures must be generated in numerical order (starting from 0 and proceeding upwards). This means that, say, for the 4th signature, the preceding signatures must be in place (even if replaced by a dummy) as part of the authentication path data of the 4th signature. This also means that, even though the 7th signature has been identified as computationally intensive, the state of the hash tree is only updated to say it has been replaced when the 6th signature has been used, which is when the 7th signature is formally replaced by a dummy signature and the state of the hash tree is then updated to say the 8th signature is to be used. Pointers corresponding to the 3rd signature can be updated in the same way, i.e. only when the dummy signature corresponding to the 3rd signature have been generated.

The time taken to generate either dummy signature may well be equal to or more than the usual signature generation, but it means that the chances of the 4th, 5th and 6th signatures being generated more quickly is increased as the 3rd signature is already generated and nodes corresponding to the authentication path for the 4th, 5th or 6th signatures which require the 3rd signature are also already calculated because of the calculation of the 3rd signature (and its corresponding authentication path) .

In more prosaic terms, the computationally intensive signatures are sacrificed by the use of a dummy signature to replace those signatures. This enables cryptographic signatures to be provided in the required "on the fly" way by the processing resource in that the processing resource is configured to determine which signatures are computationally intensive and which are not, and remove the computationally intensive signatures as an obstacle. Of course, it is not possible, in accordance with the recommendation for stateful hash-based signature schemes, to simply use the 4th signature instead of the 3rd because the nodes of the hash tree which correspond to preceding signatures are required for the authentication path of the 4th signature. That is to say, the signatures need to be computed in order.

The 4th, 5th and 6th signatures can still be generated when they are needed and indeed, given the presence of the dummy signatures, the time taken to generate those signatures is reduced substantially because the nodes corresponding to preceding signatures on the authentication path have already been calculated (as dummy signatures where appropriate) and the authentication path can be provided much more quickly,

That is to say, the computationally intensive nodes are identified based on the factor $T_F$ and they are replaced with dummy signatures which are used to support the authentication path for a current signature and then be skipped in a way which is consistent with the implementation of hash-based signature schemes to reduce the time taken to generate less computationally intensive future signatures. It should be emphasized that the calculation of the dummy signature for the 3rd signature may not require less time than if the signature was calculated when needed (rather than calculated early with a dummy signature) but by incurring this load ahead of it being needed, the signatures for 4th, 5th and 6th key pairs are generated in substantially less time because the time taken to compute the authentication is reduced (as the computationally expensive nodes on the authentication path have been calculated using dummy signatures). This means that if the signatures for the 4th, 5th and 6th key pairs are required suddenly then they can be provided more quickly as the time taken to compute the authentication path is reduced.

Optionally, signatures may be discarded where they precede a computationally intensive node.

The output from the authentication path generation module 204 provides an authentication path which includes the dummy signatures for those nodes which were deemed to be computationally intensive and any other nodes on the authentication path for the generated cryptographic signature.

It should be noted that the above-mentioned aspects and embodiments illustrate rather than limit the disclosure, and that those skilled in the art will be capable of designing many alternative embodiments without departing from the scope of the disclosure as defined by the appended claims. In the claims, any reference signs placed in parentheses shall not be construed as limiting the claims. The word "comprising" and "comprises", and the like, does not exclude the presence of elements or steps other than those listed in any claim or the specification as a whole. In the present specification, "comprises" means "includes or consists of" and "comprising" means "including or consisting of". The singular reference of an element does not exclude the plural reference of such elements and vice-versa. The disclosure may be implemented by means of hardware comprising several distinct elements, and by means of a suitably programmed computer. In a device claim enumerating several means, several of these means may be embodied by one and the same item of hardware. The mere fact that certain measures are recited in mutually different dependent claims does not indicate that a combination of these measures cannot be used to advantage.

## Claims

1. A computer implemented method of generating authentication path data for a cryptographic signature generation process, the method implemented by processing resource, the method comprising:

   traversing a hash tree, wherein the hash tree is associated with a signature generation process on a computing device;
   based on the traversal of the hash tree, identifying future cryptographic signatures to be generated in association with the hash tree;
   applying a signature generation threshold to the identified future cryptographic signatures to identify future cryptographic signatures which exceed the signature generation threshold and cryptographic signatures which do not exceed the signature generation threshold, wherein the signature generation threshold is based on the computation associated with the identified cryptographic signature;
   wherein, if the signature generation threshold is exceeded by at least one future cryptographic signature, the method further comprises generating a dummy signature to be used as part of authentication path data associated with the at least one future cryptographic signature.

2. A method according to Claim 1, wherein the method further comprises receiving a request for a cryptographic signature.

3. A method according to Claim 2, wherein the request is from an external computing resource or is generated by a computational process implemented on the processing resource.

4. A method according to any preceding claim, wherein the signature generation threshold is based on a maximum signature generation time and signature node computation cost

5. A method according to Claim 4 wherein the maximum signature generation time is specified by an entity which implements or requests the signature generation.

6. A method according to any preceding claim, wherein the method further comprises, prior to applying the signature generation threshold, optimising the signature generation threshold by iteratively modifying the signature generation threshold.

7. A method according to any preceding claim, wherein the dummy signature is based on a randomly generated character sequence.

8. A method according to any preceding claim wherein the randomly generated character sequence is an alphanumeric sequence.

9. A method according to any preceding claim wherein the processing resource is hosted within an embedded computing device.

10. A method according to any preceding claim, the method further comprising providing an authentication path as part of a cryptographic signature, wherein the authentication path comprises the dummy signature.

11. A method according to any preceding claim, wherein the identification of future signatures is based on the identification of right hand nodes in the hash tree.

12. A method according to any preceding claim, wherein, upon identifying a signature which exceeds the signature generation threshold, signatures proceeding the signature are discarded.

13. A non-transitory computer readable storage medium having stored thereon executable instructions that, as a result of being executed by a processor of a computer system, cause the computer system to at least perform the method of any one of claims 1 to 12.

14. A system configured to implement the method of Claims 1 to 12.

15. A processing resource comprising a processor and memory including executable instructions that, as a result of execution by the processor, causes the reader to perform the method of Claims 1 to 12.

S100 – a request is received for a cryptographic signature

S102 – data is extracted from the request.

S104 – OTS key pair determined.

S106 – hash tree is traversed to identify nodes corresponding to future signatures

S108 – signature generation threshold factor is calculated

S110 – signature generation threshold applied to each future signature

S112 – dummy signatures generated for computationally intensive signatures

Fig. 1

Request for a
cryptographic
signature

**200 – processing resource**

**202 – request
processing interface**

**204 – authentication path
generation module**

Cryptographic
signature and
authentication
path including
dummy signature

Fig. 2

EP 4 742 589 A1

Hash tree of height h=4, which can be used to generate $2^4$ (i.e. 16) signatures in accordance with a hash based signature scheme

h = 4

h = 3

h = 2

h = 1

Public Keys    h = 0

Secret Keys

0  1  2  3  4  5  6  7  8  9  10  11  12  13  14  15

Fig. 3

Fig. 4

Europäisches
Patentamt
European
Patent Office
Office européen
des brevets

# EUROPEAN SEARCH REPORT

**Application Number**

EP 24 21 1491

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | US 2019/319803 A1 (MISOCZKI RAFAEL [US] ET AL) 17 October 2019 (2019-10-17)<br>* figures 7-10 *<br>* paragraph [0022] *<br>* paragraph [0060] *<br>* paragraph [0063] - paragraph [0065] *<br>----- | 1-15 | INV.<br>H04L9/32<br>H04L9/00<br>G06F21/60 |
| Y | US 2019/319800 A1 (MISOCZKI RAFAEL [US] ET AL) 17 October 2019 (2019-10-17)<br>* figure 4A *<br>* figure 8 *<br>* figure 9 *<br>* paragraph [0052] *<br>* paragraph [0060] *<br>* paragraph [0069] - paragraph [0074] *<br>----- | 1-15 | |

**TECHNICAL FIELDS
SEARCHED (IPC)**

H04L
G06F

The present search report has been drawn up for all claims

| Place of search | Date of completion of the search | Examiner |
|---|---|---|
| Munich | 14 April 2025 | Caragata, Daniel |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 24 21 1491

This annex lists the patent family members relating to the patent documents cited in the above-mentioned European search report.
The members are as contained in the European Patent Office EDP file on
The European Patent Office is in no way liable for these particulars which are merely given for the purpose of information.

14-04-2025

| Patent document cited in search report | Publication date | Patent family member(s) | | Publication date |
|---|---|---|---|---|
| US 2019319803 A1 | 17-10-2019 | CN | 112152793 A | 29-12-2020 |
| | | EP | 3758285 A1 | 30-12-2020 |
| | | US | 2019319803 A1 | 17-10-2019 |
| | | US | 2022131706 A1 | 28-04-2022 |
| US 2019319800 A1 | 17-10-2019 | CN | 112152786 A | 29-12-2020 |
| | | EP | 3758281 A1 | 30-12-2020 |
| | | US | 2019319800 A1 | 17-10-2019 |

EPO FORM P0459

For more details about this annex : see Official Journal of the European Patent Office, No. 12/82